# EUROPEAN PATENT SPECIFICATION

(11) **EP 1 393 631 B1**
(45) Date of publication and mention of the grant of the patent: **14.03.2007**
(21) Application number: 02019145.8
(22) Date of filing: 30.08.2002
(51) Int. Cl.: A21D 13/08

(54) **Crunchy wafer product**
Knuspriges Waffelprodukt
Produit croustillant a base de gaufrette

(43) Date of publication of application: 03.03.2004
(73) Proprietor: Kraft Foods R & D, Inc. Zweigniederlassung München, 81737 München (DE)
(72) Inventor: Tamer, Begum, 14 Seyhan, Adana (TR); Civil, Nazmi, No: 27, Adana (TR); Kamalikocyigit, Golchin, 81110 Acibadem, Istanbul (TR)
(74) Representative: Morf, Jan Stefan

(56) References cited:
- EP-A- 0 682 872
- EP-A- 0 954 977
- FR-A- 2 218 882
- GB-A- 1 106 882
- US-A- 4 545 997
- US-A- 4 629 628
- US-A- 4 963 379
- US-A- 5 080 920
- US-A- 5 731 020
- US-A- 6 103 279
- US-A1- 2001 043 970
- US-B1- 6 177 112
- PATENT ABSTRACTS OF JAPAN vol. 018, no. 131 (C-1175), 3 March 1994 (1994-03-03) & JP 05 316930 A (MORINAGA & CO LTD), 3 December 1993 (1993-12-03)
- PATENT ABSTRACTS OF JAPAN vol. 2000, no. 04, 31 August 2000 (2000-08-31) & JP 2000 014314 A (MORINAGA &CO LTD), 18 January 2000 (2000-01-18)

## Description

### State of the Art

The present invention relates to wafer-based confectionery products which in general comprise two outer wafer layers, optionally one or more inner wafer layers and cream fillings in between. Such wafer-based confectionery products are widely known and well accepted consumer products.

The wafer layers are made from commonly known batter compositions which comprise for example wheat flour, salt, vegetable oil, Lecithin, sodium bicarbonate and water. The wafer layers must have a crunchy texture in order to achieve consumer acceptance. The disadvantage of known wafer-based confectionery products is that the crunchy texture of the wafer layers becomes doughy upon continued chewing.
Therefore, there is a demand for improved wafer-based confectionery products.

It is the object of the present invention to provide new wafer-based confectionery products which have a crunchy texture not only at the beginning of consumption, but maintain their crunchy texture upon continued chewing.

### Summary of the Invention

The object of the present invention is achieved by a confectionery product comprising two outer wafer layers, optionally one or more inner wafer layers and cream fillings between the wafer layers, wherein the wafer layers are made from a material which includes 2 to 8% by weight cocoa powder.

It was surprisingly found that the use of 2 to 8% by weight cocoa powder in the batter recipe for the wafer layers improves the crunchy texture of the confectionery product such that the crunchy texture is maintained even upon continued chewing compared with known wafer-based confectionery products which lose their crunchiness after being chewed only twice or three times because the wafer layers become doughy.

### Detailed Description of the Invention

The present invention 2 to 8% by weight is based on the discovery that wafer layers which contain cocoa powder remain crunchy upon continued chewing. They do not lose the crunchy texture after being chewed twice or three times as is the case with the known wafer-based products which do not contain cocoa within the wafer layers.

The wafer-based confectionery products which are available on the market are relatively small in size compared with the form and dimensions of a regular chocolate bar. It was found within the present invention that the eating pleasure and the product performance with respect to its crunchiness is greatly improved if the dimensions of the wafer-based confectionery product are increased. Therefore, the products of the present invention preferably have the form and dimensions of a regular chocolate bar. Regular chocolate bars normally have the following dimensions:

| | |
|---|---|
| length: | about 90 mm, |
| width: | about 30 mm, |
| height: | about 21 mm. |

No such wafer-based confectionery product is available on the market.

The products of the present invention preferably have six or seven wafer layers and correspondingly five or six cream filling layers. Furthermore, the products of the invention are preferably enrobed with chocolate.

Batter recipes for making wafer sheets are widely known in the prior art. A common wafer batter comprises for example wheat flour, salt, vegetable oil, Lecithin, sodium bicarbonate and water. For example, the following batter recipe can be used for making the wafer sheets according to the present invention:

| | |
|---|---|
| Water | 54-58% by weight |
| Wheat flour | 36-39% by weight |
| Salt | 0.6-0.9% by weight |
| Vegetable oil | 1.5-1.8% by weight |
| Lecithin | 0.2-0.3% by weight |
| Sodium bicarbonate | 0.05-0.07% by weight |
| Cocoa powder | 2-8% by weight |

The cocoa powder is preferably used in amounts of 3-6% by weight.

The cocoa powder can be of any origin. Preferably Ivory Coast cocoa powder is used.

In a first step for producing the wafer-based confectionery products of the present invention, the ingredients of the batter recipe are mixed together in any convenient mixing device. The viscosity as measured in a Ford Cup like viscosimeter should be about 39-42 sec (flow out time) at 18 to 20°C.

The obtained batter is then used for baking wafer sheets in a commonly used wafer baking equipment. The wafer sheets have dimensions which are designed according to the requirements of the end product. Because of the cocoa content, the weight of the wafer sheets increases to some extent. Based on a wafer area of 1,300 cm² and a wafer thickness of 3.0 mm, the weight increases up to about 60 g compared with 54 g for corresponding wafer sheets containing no cocoa powder. The moisture content of the wafer sheets should be about 0.8 to 1.2% by weight.

The wafer sheets are then spread with cream and stacked on top of each other as per product format. This form is called a wafer book.

Any known or useful cream can be used for the cream fillings. There is no limitation whatsoever except that the cream viscosity must be such that the cream can be set at ambient temperatures.

As the next step, the wafer book is cooled to set the cream before cutting. Afterwards, the wafer book is divided into a prescribed number of pieces in a common cutting station.
Then, after cutting, the wafer pieces are enrobed with chocolate and then cooled, for example, in a cooling tunnel, to set the final crystal structure of chocolate.

Finally, the product is packaged according to common standard procedures in any suitable foil.

The following example is illustrative of the invention and is not intended as limiting.

### Example

As a first step in the production of the new wafer-based confectionery product, wafer sheets were produced from the following materials including dark cocoa powder:

| | |
|---|---|
| Water | 75.00 kg |
| Wheat flour | 50.00 kg |
| Salt | 1.00 kg |
| Vegetable oil | 2.20 kg |
| Lecithin | 0,35 kg |
| Sodium bicarbonate | 0.08 kg |
| Cocoa powder (10/12 alkanized) | 5.00 kg |
| Total batch | 133.63 kg |

To produce the batter, the ingredients were mixed in a Hebenstreit mixer according to the following procedure:

| Ingredients | Mixing time |
|---|---|
| Water (1/2) | 15 sec. |
| Sodium bicarbonate | |
| Salt | |
| | |
| Wheat flour | 60 sec. |
| Cocoa powder | |
| Water (1/2) | |
| | |
| Lecithin | 60 sec. |
| Vegetable oil | |

The viscosity of the batter was 39 sec.

Wafer sheets were baked from the obtained batter in a common wafer baking equipment. Baking time was 1.8 minutes. The weight of the wafer sheets increased to 61 ± 2 g per 1,300 cm² (from 54 g without cocoa powder). The moisture content was 0.9% by weight.

The wafer sheets were then spread with cream and stacked on top of each other to produce the so-called wafer book, which was cooled afterwards to set the cream before cutting. The wafer book was then divided into the prescribed number of pieces in the cutting station. The obtained wafer bars were enrobed with chocolate and conveyed to a cooling tunnel to set the final chocolate crystal structure.

The wafer products had the following form and dimensions:

| | |
|---|---|
| 6 layers of wafer sheet | |
| 5 layers of cream filling | |
| Milk chocolate coating | |
| Length | 92 mm |
| Width | 30 mm |
| Height | 21 mm |

When compared with commercially available wafer-based confectionery products, the wafer products of the present invention had an excellent crunchy texture and maintained the crunchiness upon continued chewing. The commercially available wafer-based confectionery products lost their original crunchiness upon chewing and became doughy.

## Claims

1. Confectionery product comprising two outer wafer layers, optionally one or more inner wafer layers and cream fillings between the wafer layers, **characterized in that** the wafer layers are made from a batter material which includes 2 to 8% by weight cocoa powder.

2. Confectionery product according to any of the preceding claims, wherein the product has the form and dimensions of a regular chocolate bar.

3. Confectionery product according to any of the preceding claims wherein the product includes 6 or 7 wafer layers and correspondingly 5 or 6 cream filling layers.

4. Confectionery product according to any of the preceding claims wherein the product is enrobed with chocolate.

## Patentansprüche

1. Süßwarenprodukt, umfassend zwei äußere Waffelschichten, gegebenenfalls eine oder mehrere innere Waffelschichten und Cremefüllungen zwischen den Waffelschichten, **dadurch gekennzeichnet, dass** die Waffelschichten aus einem Teigmaterial hergestellt sind, das 2 bis 8 Gew.-% Kakaopulver enthält.

2. Süßwarenprodukt gemäß irgendeinem der vorhergehenden Ansprüche, wobei das Produkt die Form und Abmessungen eines gewöhnlichen Schokoladenriegels besitzt.

3. Süßwarenprodukt gemäß irgendeinem der vorhergehenden Ansprüche, wobei das Produkt 6 oder 7 Waffelschichten und dementsprechend 5 oder 6 Schichten Cremefüllung enthält.

4. Süßwarenprodukt gemäß irgendeinem der vorhergehenden Ansprüche, wobei das Produkt mit Schokolade umhüllt ist.

## Revendications

1. Produit de confiserie comprenant deux couches extérieures à base de gaufrette, éventuellement une ou plusieurs couches intérieures à base de gaufrette et une garniture à base de crème située entre les couches de gaufrette, **caractérisé en ce que** les couches de gaufrette sont élaborées à partir d'une pâte comprenant de 2 à 8 % en poids de poudre de cacao.

2. Produit de confiserie selon la revendication précédente, le produit présentant la forme et les dimensions d'une barre chocolatée standard.

3. Produit de confiserie selon l'une quelconque des revendications précédentes, le produit comprenant 6 ou 7 couches de gaufrette et 5 ou 6 couches, selon le cas, de garniture à base de crème.

4. Produit de confiserie selon l'une quelconque des revendications précédentes, le produit étant enrobé de chocolat.
